# EUROPÄISCHE PATENTANMELDUNG

(11) **EP 0 769 757 A1**
(43) Veröffentlichungstag der Anmeldung: **23.04.1997**
(21) Anmeldenummer: 95116624.8
(22) Anmeldetag: 21.10.1995
(51) Int. Cl.: G06K 19/04, G06K 19/07, G07F 1/06, G07B 15/04

(54) **Identifikationsträger zur Zugangs- und Berechtigungskontrolle**

(71) Anmelder: SCHEIDT & BACHMANN GMBH, D-41238 Mönchengladbach (DE)
(72) Erfinder: Dr Norbert Miller, D - 41063 Mönchengladbach (DE)
(74) Vertreter: Stenger, Watzke & Ring Patentanwälte

(57) **Zusammenfassung**

Ein Identifikationsträger zur Zugangs- oder Berechtigungskontrolle ist mit einem münzförmig gestalteten Gehäuse, einem darin angeordneten, von außen berührungslos speicher- und lesbaren Chip zum zumindest vorläufigen Abspeichern von Kenngrößen sowie Zeitgrößen im Rahmen der Zugangs- oder Berechtigungskontrolle, sowie mit einer an oder in dem Gehäuse angeordneten Antenne für den berührungslosen Informations- und Datenaustausch zwischen dem Chip und einer externen Lese- und Schreibstation versehen. Um ein Haften der Seitenflächen des Identifikationsträgers an den Seitenflächen eines benachbarten Identifikationsträgers zu verhindern, sind die Seitenflächen 5 des Gehäuses 1 überwiegend flach gestaltet und mit mindestens einer nach außen gewölbten Erhebung 6 versehen.

## Beschreibung

Die Erfindung betrifft einen Identifikationsträger zur Zugangs- oder Berechtigungskontrolle mit einem Gehäuse in Gestalt einer Münze, einem darin angeordneten, von außen berührungslos speicher- und lesbaren Chip zum zumindest vorläufigen Abspeichern von Kenngrößen sowie Zeitgrößen im Rahmen einer automatisch überwachten Zugangs- oder Berechtigungskontrolle, und einer an oder in dem Gehäuse angeordneten Antenne für den berührungslosen Informations- und Datenaustausch zwischen dem Chip und einer externen Lese- und Schreibstation.

Im Rahmen von Zugangs- oder Berechtigungskontrollen, etwa in einem Parkhaus, werden flache Identifikationsträger verwendet, auf denen vor der Ausgabe mit maschinenlesbaren Zeichen die Einfahrtzeit markiert wird. Aus der DE 44 32 649 A1 ist zu diesem Zweck ein speicher- und lesbarer Chip innerhalb eines als Identifikationsträger dienenden münzförmigen Kunststoffstückes angeordnet. Mittels des Chips lassen sich zumindest vorläufig Kenngrößen sowie Zeitgrößen im Rahmen der automatisch überwachten Zugangs- oder Berechtigungskontrolle maschinenlesbar abspeichern. Der Vorteil des in der DE 44 32 649 A1 beschriebenen Identifikationsträgers liegt in dessen runder Münzform, wodurch der Identifikationsträger in einer entsprechenden Eingabe- und Ausgabeeinheit rollend transportiert werden kann.

Die bekannten, in Gestalt einer Münze geformten Indentifikationsträger weisen allerdings den Nachteil auf, mit ihren Seitenflächen an benachbarten Flächen zu haften. Dieses Problem besteht insbesondere dann, wenn die betreffenden Identifikationsträger aufeinanderliegend gestapelt werden, und der zuunterst angeordnete Identifikationsträger aus diesem Stapel herausgezogen werden soll. Dieses Herausziehen wird durch das Haften der aufeinanderliegenden Seitenflächen zumindest erschwert.

Auch die in der DE 44 32 649 A1 beschriebenen Gestaltungsvarianten eines münzförmigen Identifikationsträgers können dieses Problem nicht endgültig lösen, da ungeachtet der in dieser Druckschrift vorgeschlagenen Randgestaltung die beiden Seitenflächen des Identifikationsträgers eben bzw. flach gestaltet sind und daher dazu neigen, aneinander zu haften. Auch eine konkave Wölbung der Seitenflächen des Identifikationsträgers schließt ein gegenseitiges Haften nicht aus, da beim Aneinanderliegen zweier solcher Identifikationsträger im Bereich der Berührungsflächen ein geschlossener Raum entsteht, der vergleichbar einem Vakuum das anschließende Lösen der aneinanderliegenden Identifikationsträger zumindest erschwert.

Der Erfindung liegt daher die **Aufgabe** zugrunde, bei einem Identifikationsträger zur Zugangs- oder Berechtigungskontrolle mit einem Gehäuse in Gestalt einer Münze ein Haften der Seitenflächen an den Seitenflächen eines benachbarten Identifikationsträgers zu verhindern.

Zur **Lösung** wird bei einem Identifikationsträger der eingangs genannten Art vorgeschlagen, daß die Seitenflächen des Gehäuses überwiegend flach gestaltet und mit mindestens einer nach außen gewölbten Erhebung versehen sind.

Diese Erhebung führt dazu, daß die beiden Seitenflächen benachbarter Identifikationsträger niemals unmittelbar aneinanderliegen können, und daher ein Haften aufgrund der Flächenadhäsion verhindert wird. Ferner kann sich zwischen den benachbarten Seitenflächen kein geschlossener Hohlraum bilden, der geeignet wäre, ein leichtes Lösen der Seitenflächen zu behindern.

Bei einer ersten Ausgestaltung des Identifikationsträgers ist die Anordnung der mindestens einen Erhebung symmetrisch zur Symmetrieachse des Gehäuses. Gemäß einer weiteren Ausgestaltung wird eine einzige Erhebung auf der Symmetrieachse des Gehäuses vorgeschlagen.

Um eine parallele Ausrichtung des Identifikationsträgers sowohl innerhalb eines entsprechenden Führungskanales, als auch bezüglich eines benachbarten identischen Identifikationsträgers sicherzustellen, kann gemäß einer weiteren Ausgestaltung eine Mehrzahl von Erhebungen auf einem Kreisring um die Symmetrieachse des Gehäuses herum angeordnet sein. In diesem Fall befinden sich die Erhebungen vorzugsweise nahe des Randes des Gehäuses, wodurch eine besonders stabile Lage des Identifikationsträgers sowie gute seitliche Führungseigenschaften erzielt werden.

Vorzugsweise weist die mindestens eine Erhebung die Gestalt einer Noppe auf. Die Noppe kann hierbei halbkugelförmig gestaltet sein.

Schließlich wird vorgeschlagen, daß alle Erhebungen zusammen eine Fläche von nicht mehr als 20 % der Größe der beiden Flächen bedecken.

Weitere Einzelheiten und Vorteile werden nachfolgend anhand der zugehörigen Zeichnung erläutert. Darin zeigen:
- Fig. 1a: in einer Draufsicht einen Identifikationsträger, wie er aus dem Stand der Technik gemäß DE 43 35 868 C1 bekannt ist;
- Fig. 1b: den Identifikationsträger gemäß Fig. 1a in einer Schnittdarstellung;
- Fig. 2: in einer Schnittdarstellung zwei aufeinanderliegende Identifikationsträger der in den Fig. 1a und 1b dargestellten, zum Stand der Technik gehörenden Art;
- Fig. 3a: einen erfindungsgemäßen Informationsträger in Draufsicht;
- Fig. 3b: den Identifikationsträger gemäß Fig. 3a in einer Schnittdarstellung;
- Fig. 4a: in einer weiteren Ausführungsform einen weiteren erfindungsgemäßen Identifikationsträger in Draufsicht und
- Fig. 4b: den Identifikationsträger gemäß Fig. 4a in einer Schnittdarstellung.

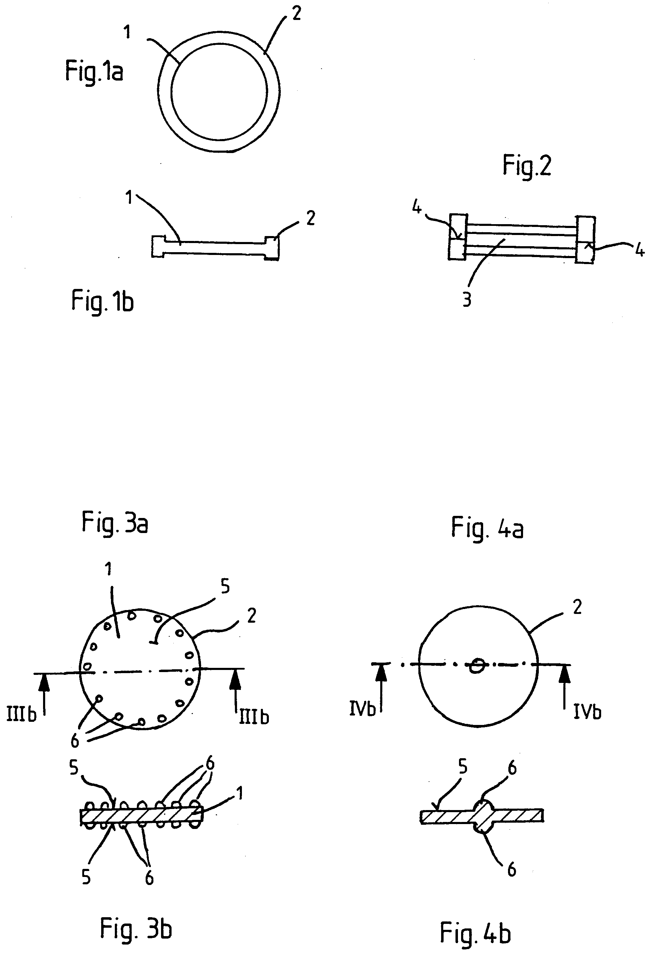

Der in den Fig. 1a und 1b dargestellte Identifikationsträger ist in dieser konkreten Gestalt aus der DE 43 35 868 C1 bekannt. Er besteht aus einem Gehäuse 1 aus Kunststoff, welches rund und münzförmig gestaltet ist und mit einem verdickten Rand 2 versehen ist. Der Rand 2 kann zum Zwecke der Verstärkung aus Metall bestehen. In dem Gehäuse 1 befindet sich ein auf der Zeichnung nicht dargestellter Hohlraum, in den ein berührungslos speicher- und lesbarer Chip eingesetzt ist. Derartige Chips werden auch als Transponder bezeichnet. Der Chip ist mit einer Antenne versehen, über die ein berührungsloser Informations- und Datenaustausch zwischen dem Chip und einer externen Lese- und Schreibstation erfolgt.

Innerhalb einer Ein- und Ausgabestation werden derartige Identifikationsträger aufeinanderliegend gestapelt. Hierbei ergibt sich an den Berührungsflächen zweier benachbarter Identifikationsträger die in Fig. 2 dargestellte Situation, bei der zwischen den Seitenflächen der beiden Identifikationsträger ein geschlossener Raum 3 entsteht. Dieser Raum 3 kann ähnlich einem Vakuum wirken und dazu führen, daß sich die beiden Identifikationsträger nicht mit der gewünschten Leichtigkeit voneinander lösen lassen. Hierzu trägt ferner bei, daß die Berührungsflächen 4 der beiden Identifikationsträger flach und eben geformt sind, und daher, insbesondere auch im Hinblick auf die Eigenschaft vieler Kunststoffe, elektrostatische Oberflächenkräfte auszuüben, nicht hinreichend gut voneinander lösbar sind. Dies erschwert die maschinelle Verarbeitung und Handhabung derartiger Identifikationsträger innerhalb automatischer Eingabe- und Ausgabeeinheiten von Berechtigungs-Kontrollsystemen, etwa in einem gebührenpflichtigen Parkhaus.

Um ein Haften der Seitenflächen an den Seitenflächen des benachbarten Identifikationsträgers oder einer anderen Fläche zu verhindern, wird gemäß einer ersten Ausführungsform der in den Fig. 3a und 3b dargestellte Identifikationsträger vorgeschlagen. Dieser verfügt über ein rundes, münzförmiges Gehäuse 1 mit zwei zueinander parallelen und jeweils flachen Seitenflächen 5. Diese Seitenflächen 5 sind mit nach außen gewölbten Erhebungen versehen, wobei diese Erhebungen die Gestalt von Noppen 6 aufweisen, die einstückig an dem Material des Gehäuses 1 angeformt sind. Ein solches Gehäuse 1 läßt sich zum Beispiel aus zwei miteinander verklebten, identischen Gehäusehälften zusammensetzen.

Bei der in den Fig. 3a und 3b dargestellten Ausführungsform sind die Noppen 6 auf einem Kreisring nahe des Außenrandes des Gehäuses 1 angeordnet. Die Abstände zwischen den einzelnen Noppen 6 können gleich sein; für bestimmte Anwendungen kann es jedoch auch von Vorteil sein, wenn diese Abstände unterschiedlich groß ausfallen und daher eine bewußte Asymmetrie hergestellt wird.

Da die Noppen 6 nach außen gewölbt sind, ergibt sich beim Anliegen eines solchen Identifikationsträgers an einer benachbarten Fläche stets eine ausschließlich punktförmige Berührung. Ein Kleben des Identifikationsträgers an der benachbarten Fläche infolge von Adhäsionskräften ist damit ausgeschlossen. Ferner können sich zwischen benachbarten Flächen keine geschlossenen Hohlräume bilden. Dieser Vorteil wird sowohl erreicht, wenn die in den Fig. 3a und 3b dargestellte Münze an einer glatten Fläche anliegt, zum Beispiel der Innenfläche eines Führungskanals, als auch in solchen Fällen, in denen zwei identische Münzen aneinanderliegend gestapelt sind.

Bei der in den Fig. 4a und 4b dargestellten Ausführungsform eines Identifikationsträgers ist lediglich eine einzige Erhebung 6 auf jeder der beiden Seitenflächen 5 des münzförmigen Identifikationsträgers vorgesehen. Aber auch diese einzige Erhebung 6 reicht bereits aus, um den beschriebenen Vorteil eines leichten Lösens von einer benachbarten Fläche zu erzielen.

Die Fig. 3a bis 4b geben nur zwei Möglichkeiten wieder, die Erhebungen bzw. Noppen 6 auf den Seitenflächen 5 des Gehäuses 1 anzuordnen. Andere Anordnungen der Noppen 6, zum Beispiel über die gesamte Seitenfläche 5 des Gehäuses 1 verteilt, sind ebenfalls möglich, sofern sichergestellt ist, daß sich infolge der Erhebungen bzw. Noppen 6 lediglich eine Punktberührung der benachbarten Unterlage oder Fläche einstellt. Alle Erhebungen bzw. Noppen 6 zusammen sollten eine Fläche von nicht mehr als 20 % der Größe der Seitenflächen 5 bedecken.

### Bezugszeichenliste

- 1: Gehäuse
- 2: Rand
- 3: geschlossener Raum
- 4: Berührungsfläche
- 5: Seitenfläche
- 6: Erhebung/Noppe

## Patentansprüche

1. Identifikationsträger zur Zugangs- oder Berechtigungskontrolle mit einem Gehäuse in Gestalt einer Münze, einem darin angeordneten, von außen berührungslos speicher- und lesbaren Chip zum zumindest vorläufigen Abspeichern von Kenngrößen sowie Zeitgrößen im Rahmen einer automatisch überwachten Zugangs- oder Berechtigungskontrolle, und einer an oder in dem Gehäuse angeordneten Antenne für den berührungslosen Informations- und Datenaustausch zwischen dem Chip und einer externen Lese- und Schreibstation,
**dadurch gekennzeichnet**,
daß die Seitenflächen (5) des Gehäuses (1) überwiegend flach gestaltet und mit mindestens einer nach außen gewölbten Erhebung (6) versehen sind.

2. Identifikationsträger nach Anspruch 1, dadurch gekennzeichnet, daß die Anordnung der mindestens einen Erhebung (6) symmetrisch zur Symmetrieachse des Gehäuses ist.

3. Identifikationsträger nach Anspruch 1 oder Anspruch 2, gekennzeichnet durch eine einzige Erhebung (6) auf der Symmetrieachse des Gehäuses (1).

4. Identifikationsträger nach einem der vorangehenden Ansprüche, dadurch gekennzeichnet, daß eine Mehrzahl von Erhebungen (6) auf einem Kreisring um die Symmetrieachse des Gehäuses (1) herum angeordnet ist.

5. Identifikationsträger nach Anspruch 4, dadurch gekennzeichnet, daß sich die Erhebungen (6) nahe des Randes des Gehäuses (1) befinden.

6. Identifikationsträger nach einem der vorangehenden Ansprüche, dadurch gekennzeichnet, daß die mindestens eine Erhebung (6) die Gestalt einer Noppe aufweist.

7. Identifikationsträger nach Anspruch 6, dadurch gekennzeichnet, daß die Noppe halbkugelförmig gestaltet ist.

8. Identifikationsträger nach einem der vorangehenden Ansprüche, dadurch gekennzeichnet, daß alle Erhebungen (6) zusammen eine Fläche von nicht mehr als 20 % der Größe der Seitenflächen (5) bedecken.
